# EUROPEAN PATENT APPLICATION

(11) **EP 2 541 899 A1**
(43) Date of publication of application: **02.01.2013**
(21) Application number: 11747533.5
(22) Date of filing: 25.02.2011
(51) Int. Cl.: H04N 5/66, G09G 5/00, G09G 5/02, G09G 5/06, H04N 9/30

(54) **IMAGE DISPLAY DEVICE AND ON-SCREEN DISPLAY METHOD**

(30) Priority: 25.02.2011 JP 2011039891; 26.02.2010 JP 2010043098
(71) Applicant: Sharp Kabushiki Kaisha, Osaka-shi, Osaka 545-8522 (JP)
(72) Inventor: Yoshitani, Hitoshi, Osaka 545-8522 (JP); Oonishi, Yoshinori, Osaka 545-8522 (JP)
(74) Representative: Müller - Hoffmann & Partner
(86) International application number: PCT/JP2011/054376
(87) International publication number: WO 2011/105577

(57) **Abstract**

A television receiver, which is an image display device of the present invention, includes an EPG/OSD/reservation processing section (24) including a CLUT application section (1) and a CLUT update section (2). The CLUT application section (1) causes an OSD area to be divided into a plurality of division areas, and CLUTs are applied to the respective plurality of division areas. The CLUT update section (2) causes a CLUT, which has been applied, to be changed to another CLUT so as to realize palette animation in one of the division areas. This makes it possible to provide an image display device and a method for displaying an on-screen display image, both of which enable an OSD expression with high resolution and high memory efficiency, in which OSD expression palette animation can be realized at a high speed regardless of the number of colors used in original image data of the OSD.

## Description

### Technical Field

The present invention relates to an image display device for displaying an on-screen image, and a method for displaying an on-screen display image.

### Background Art

There has been provided an image display device which has an on-screen display (OSD) function of displaying (i) a video frame of a television signal or the like and (ii) an image signal, superimposed on the video frame, of control information in a form of characters or figures or service information in a form of characters or figures. In general, in order for the image display device to generate the image signal such as the control information or the service information, color information which is obtained by arranging pixels, which constitute an image, in an order of display scanning is required. There has been known a method (hereinafter referred to as indexed color) in which, for the purpose of designating color information to be displayed at a pixel position, a color information number, which is a number given to the color information to be displayed, is designated instead of the color information. A table in which a correspondence between color numbers according to indexed color and actual colors is defined is referred to as a color map, a color lookup table (CLUT), or a color palette.

Indexed color has an advantage of enabling a total amount of data required in processing to be effectively reduced in a case where the number of colors of an image is small.

In recent years, as television receivers become thinner and larger, display quality and resolution have become an issue for the television receivers at the time of displaying on-screen images of a large number of display icons, operation icons, operation menus, or the like on a display screen. In a case of displaying a high-resolution on-screen image with beautiful natural colors, for example, in a case of displaying a high-definition, 1920 x 1080 pixel on-screen image at a resolution of 32 bits per pixel, a memory of 1920 × 1080 × 32/8 = 8294400 bytes per screen is required. In addition, in a case where a time lag exists between display areas when a cursor is moved between the display areas so as to select each of the operation icons, operation menus, or the like, smoothness of the display quality is impaired.

Accordingly, in a case where a frame buffer memory is limited by means of a single plane structure, either the number of colors or resolution is given greater importance according to the structure. It is thus impossible to achieve both the number of colors and the resolution.

In a case of a structure in which a plurality of planes, for example, a 32-bit full color plane and an 8-bit index color plane, are superimposed on each other, an enormous memory capacity of 10,368,000 bytes (a full color plane 8,294,400 bytes + an index color plane 2,073,600 bytes) is necessary since the 32-bit full color plane and the 8-bit index color plane are each secured over an entire screen.

In view of this, a technique which enables an on-screen image to be displayed with high memory efficiency has been provided as described in Patent Literature 1. In the technique of Patent Literature 1, an on-screen display area is divided into a plurality of areas, to each of which a frame buffer is independently allocated. These areas are then combined by an on-screen display control device in an analog way or a digital way into an entire screen area of a single sheet.

As another technique of displaying an OSD image in accordance with indexed color, it is known that dynamically changing only a color map without changing a pixel data itself allows a quick adjustment of a display color, in a case where a function of converting a color map by means of hardware is available in displaying an OSD image in accordance with indexed color (Non-patent Literature 1).

There is known a technique in which a whole area of a color lookup table can be rewritten on a line basis while image data is displayed (Patent Literature 2). Specifically, a background image, a window A, and a window B are provided with respective different color lookup tables, and a whole area of each of the color lookup tables is rewritten on a line-by-line basis.

### Citation List

### [Patent Literature]

Patent Literature 1
   Japanese Patent Application Publication, Tokukai, No. 2008-107601 A (Publication Date: May 8, 2008)
Patent Literature 2
   Japanese Patent Application Publication, Tokukai, No. 2005-326701 A (Publication Date: November 24, 2005)

### [Non-patent Literature]

Non-patent Literature 1
   WIKIPEDIA The Free Encyclopedia (Wikipedia) (Search word "indexed color") URL: http://ja.wikipedia.org/wiki/%E3%82%A4%E3%83%B3%E3 %83%87%E3%83%83%E3%82%AF%E3%82%B9%E3%82%AB %E3%83%A9%E3%83%BC

### Summary of Invention

### Technical Problem

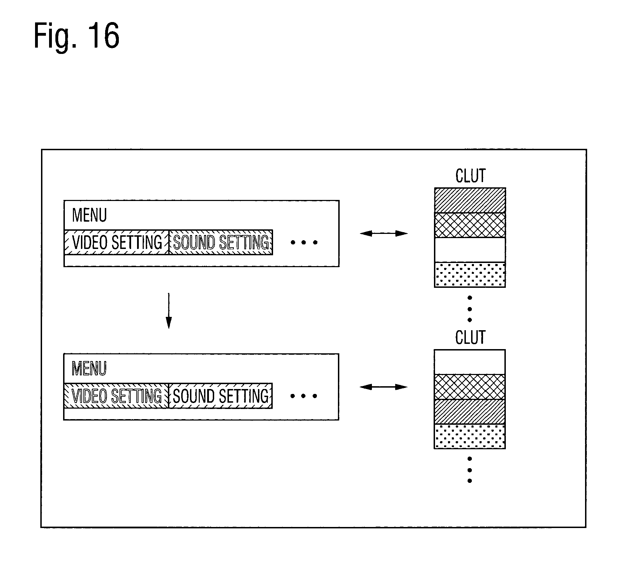

However, the technique of dynamically changing only a color map as described in Non-patent Literature 1 has a problem that in a case where, for example, areas within the same OSD area use the same color (indexed color) as shown in Fig. 16, a color of an area that is originally not intended to be changed among the areas is also changed when the color map is changed. In the case of Fig. 16, black is used as a font color of both "Menu" and "VIDEO SETTING." Accordingly, in a case where, for example, the font color of "VIDEO SETTING" is changed from black to white so that a selected part is moved from "VIDEO SETTING" to "SOUND SETTING", a font color of "Menu" is also changed into white.

### Solution to Problem

The present invention is accomplished in view of the above problems. An object of the present invention is to provide (i) an image display device which is capable of an OSD expression with high resolution and high memory efficiency, in which OSD expression palette animation can be realized at a high speed regardless of the number of colors used in original image data of an OSD and (ii) a method for displaying an on-screen display image.

In order to attain the object, an image display device in accordance with the present invention is an image display device having an on-screen display function and employing indexed color, including: applying means for applying color lookup tables to a respective plurality of division areas, into which an on-screen display area has been divided; and table converting means for converting, in each of at least one of the plurality of division areas, the applied color lookup table from a first color lookup table to a second color lookup table which is different from the first color lookup table.

According to the configuration, color lookup tables are applied to the respective plurality of division areas, into which the on-screen display area has been divided in the image display device in accordance with the present invention. This makes it possible to achieve, without increasing a memory bandwidth, a display quality having a high resolution as compared with a configuration which employs indexed color and in which only one color lookup table (CLUT) is applied to a whole of an on-screen display area.

In addition, according to the configuration, the image display device of the present invention includes table converting means for replacing a CLUT, which has been applied, with another CLUT. This eliminates the need for changing original image data, and drawing can be speeded up, accordingly.

Particularly, since the table converting means has such a CLUT update function for each of the plurality of division areas, a cursor movement in the OSD can be expressed by means of palette animation.

Further, even in a case where, for example, gradation is used in a background color of the OSD, provision of the CLUT update function for each of the plurality of division areas can achieve, without increasing a memory bandwidth, a color expression equivalent to that in a full-color mode.

In addition, in Patent Literature 2 described above, the background image, the window A, and the window B are provided with respective different color lookup tables, and a whole area of each of the color lookup tables is rewritten on a line-by-line basis. By contrast, according to the configuration of the present invention, (i) color lookup tables are applied to the respective plurality of division areas on a division area-by-division area basis, into which plurality of division areas an on-screen display area has been divided, and (ii) a type of a lookup table can be changed in at least one of the plurality of division areas.

In order to attain the object, a method for displaying an on-screen display image in accordance with the present invention is a method for displaying an on-screen display image by use of an image display device which has an on-screen display function and employs indexed color, said method including the steps of: (i) applying color lookup tables to a respective plurality of division areas, into which an on-screen display area has been divided, so as to display the on-screen display image; and (ii) converting, in each of at least one of the plurality of division areas, the applied color lookup table from a first color lookup table to a second color lookup table which is different from the first color lookup table.

According to the configuration, in the method for displaying an on-screen display image in accordance with the present invention, color lookup tables are applied to the respective plurality of division areas on a division area-by-division area basis, into which plurality of division areas the on-screen display area has been divided. This makes it possible to achieve, without increasing a memory bandwidth, a display quality having a high resolution as compared with a configuration which employs indexed color and in which only one color lookup table (CLUT) is applied to a whole of an on-screen display area.

In addition, according to the configuration, the method for displaying an on-screen display image in accordance with the present invention includes the step (ii) for replacing a CLUT, which has been applied, with another CLUT. This eliminates the need for changing original image data, and drawing can be speeded up, accordingly.

Particularly, in the step (ii), since such a CLUT update function is provided for each of the plurality of division areas, a cursor movement in the OSD can be expressed by means of, for example, palette animation.

Further, even in a case where, for example, gradation is used in a background color of the OSD, provision of the CLUT update function for each of the plurality of division areas can achieve, without increasing a memory bandwidth, a color expression equivalent to that in a full-color mode.

In addition to the configuration, the method for displaying an on-screen display image in accordance with the present invention preferably has a configuration in which the step (i) includes applying a specific color lookup table on the basis of address information indicative of a place in which data constituting a color lookup table is stored; and the step (ii) includes rewriting the address information to be used in the step (i).

According to the configuration, it is possible to change (update) a CLUT by changing only the address information indicative of the place in which the data constituting the CLUT is stored. This enables a reduction in processing time as compared with a case in which display data itself is rewritten and with a case in which CLUT data itself is rewritten.

In order to attain the object, a program of the present invention is a program for activating a computer as each means of the image display device. In order to attain the object, a computer-readable storage medium of the present invention is a computer-readable storage medium in which the program is recorded.

According to this, a program having an interface with an improved operability and a storage medium in which the program is recorded can be provided.

Additional objects, features, and strengths of the present invention will be made clear by the description below. Further, the advantages of the present invention will be evident from the following explanation in reference to the drawings.

### Advantageous Effects of Invention

As described above, an image display device in accordance with the present invention is an image display device having an on-screen display function and employing indexed color including: applying means for applying color lookup tables to a respective plurality of division areas, into which an on-screen display area has been divided; and table converting means for converting, in each of at least one of the plurality of division areas, the applied color lookup table from a first color lookup table to a second color lookup table which is different from the first color lookup table.

As described above, a method for displaying an on-screen display image in accordance with the present invention is a method for displaying an on-screen display image by use of an image display device which has an on-screen display function and employs indexed color, the method including the steps of: (i) applying color lookup tables to a respective plurality of division areas, into which an on-screen display area has been divided; and (ii) converting, in each of at least one of the plurality of division areas, the applied color lookup table from a first color lookup table to a second color lookup table which is different from the first color lookup table.

According to the configurations, it becomes possible to provide an image display device and an on-screen display method both of which are capable of an OSD expression with high resolution and high memory efficiency, in which OSD expression palette animation can be realized with a high speed regardless of the number of colors used by original image data of an OSD.

### Brief Description of Drawings

Fig. 1

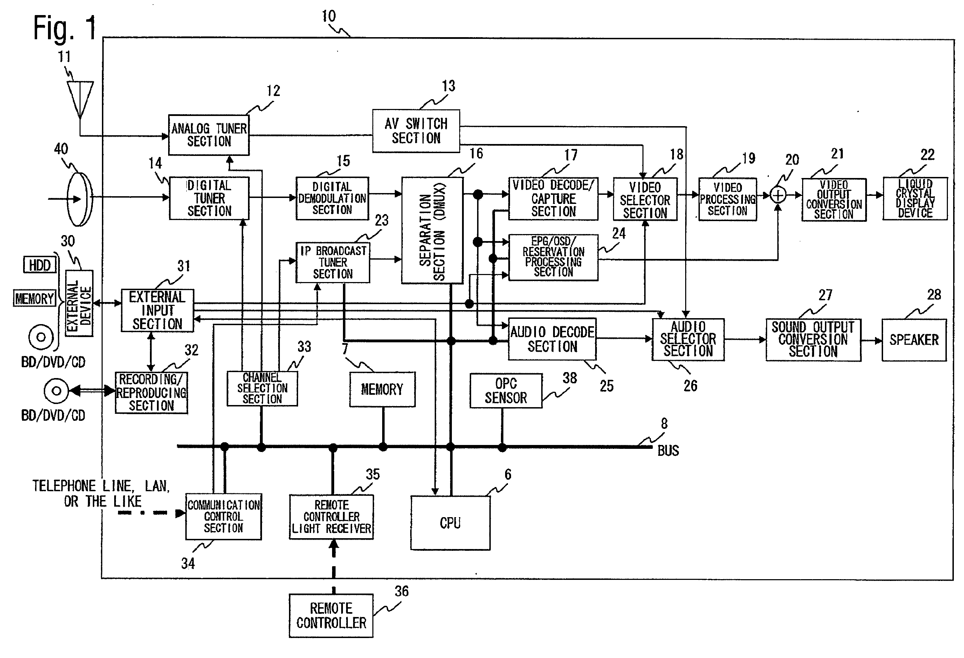

   Fig. 1 is a block diagram illustrating a configuration of a television receiver which is an image display device of an embodiment of the present invention.
Fig. 2

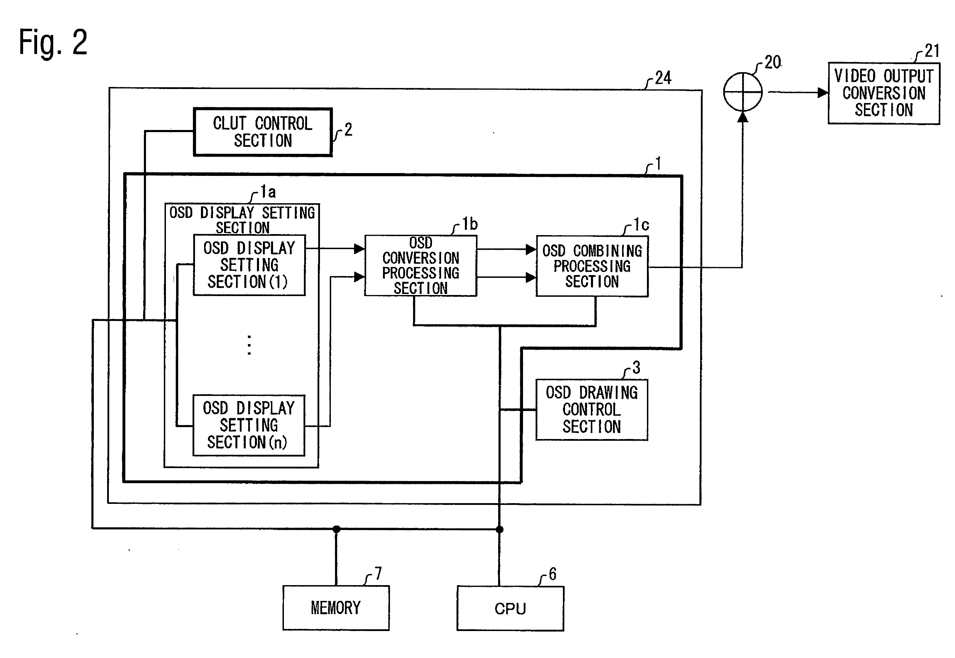

   Fig. 2 is a block diagram illustrating a partial configuration of the television receiver illustrated in Fig. 1.
Fig. 3

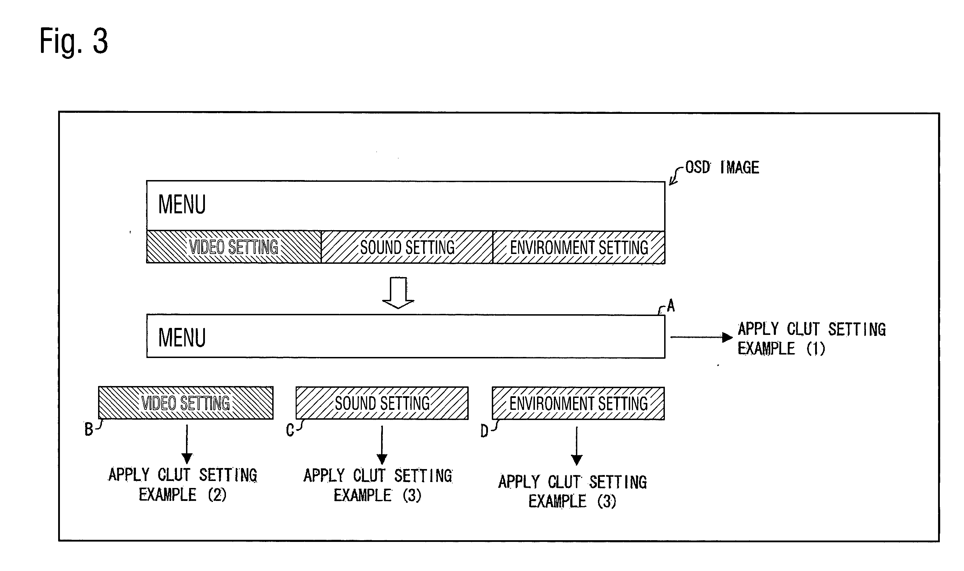

   Fig. 3 is a view illustrating a state in which an OSD area is divided into a plurality of division areas.
Fig. 4

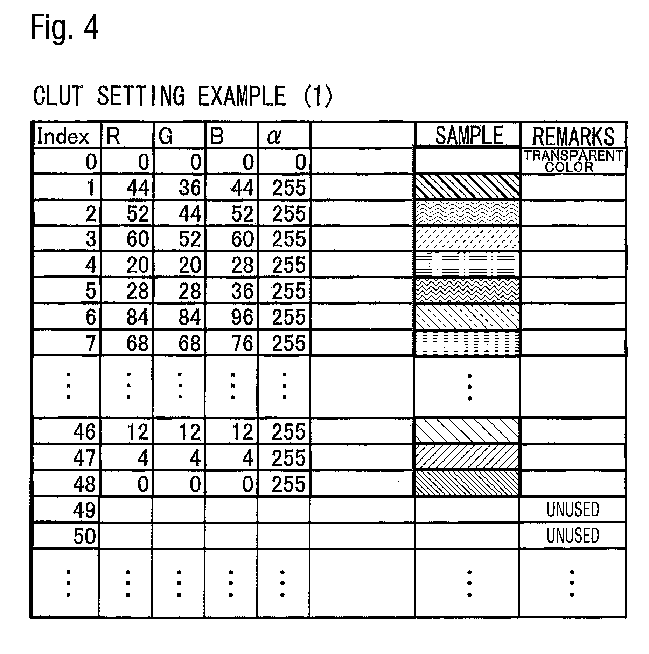

   Fig. 4 is a view showing a content of a CLUT setting example (1).
Fig. 5

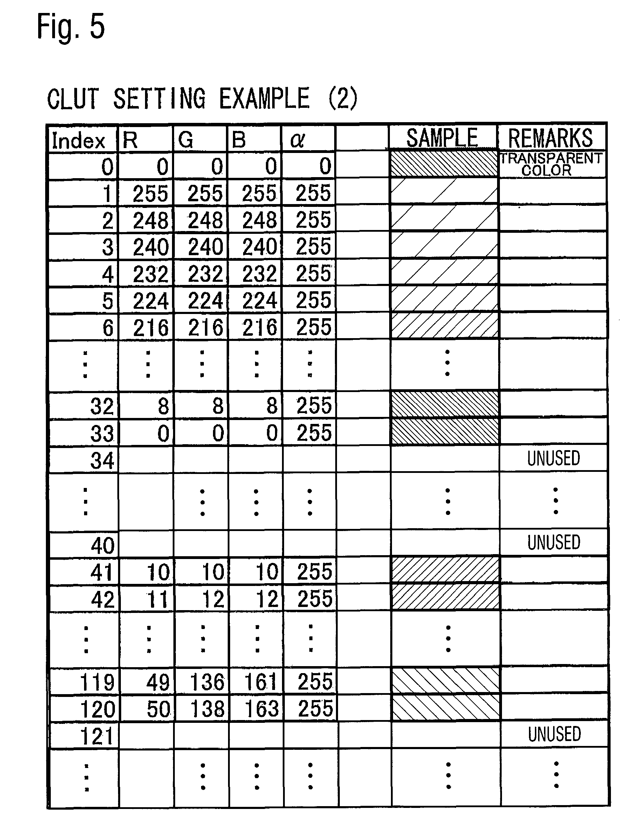

   Fig. 5 is a view showing a content of a CLUT setting example (2).
Fig. 6

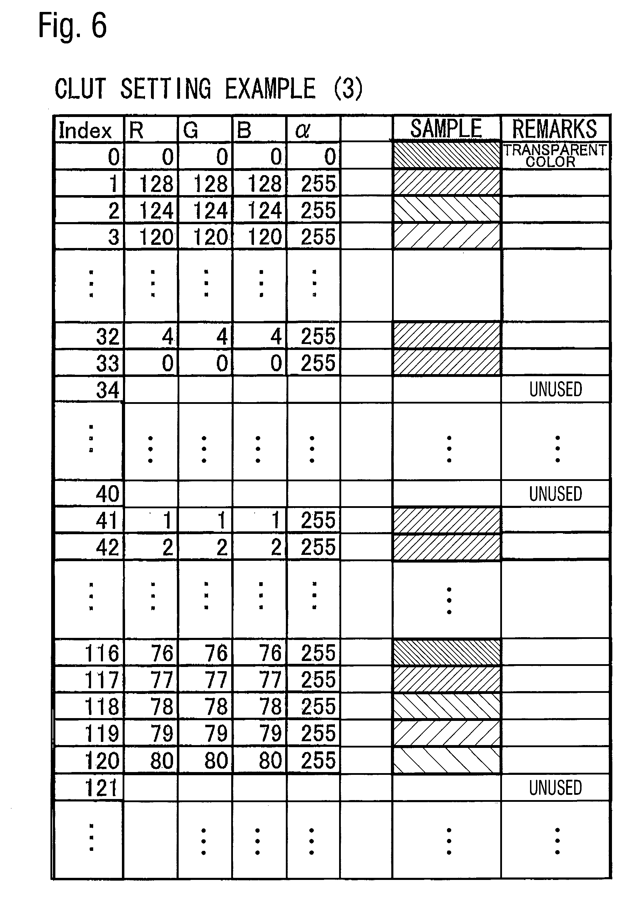

   Fig. 6 is a view showing a content of a CLUT setting example (3).
Fig. 7

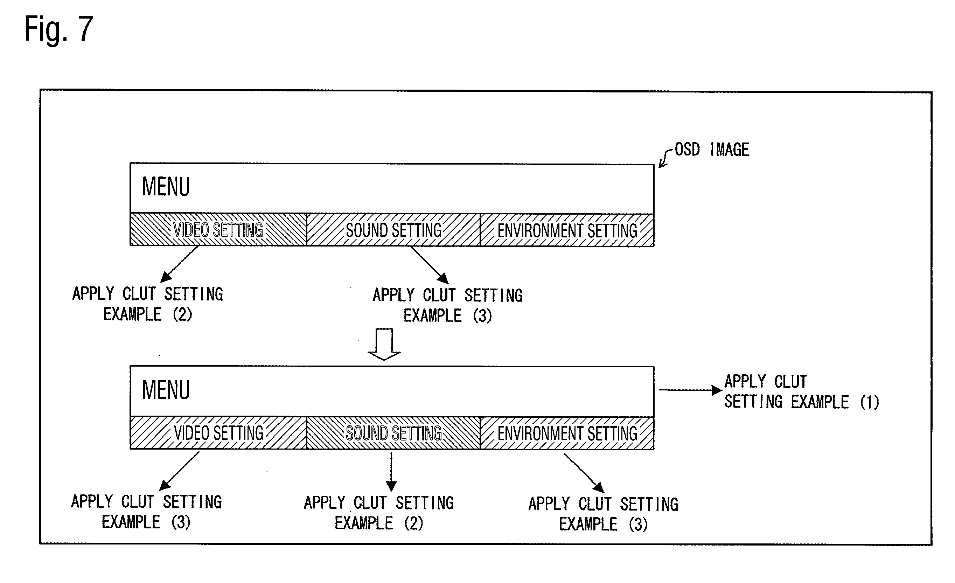

   Fig. 7 is a view illustrating a cursor movement.
Fig. 8

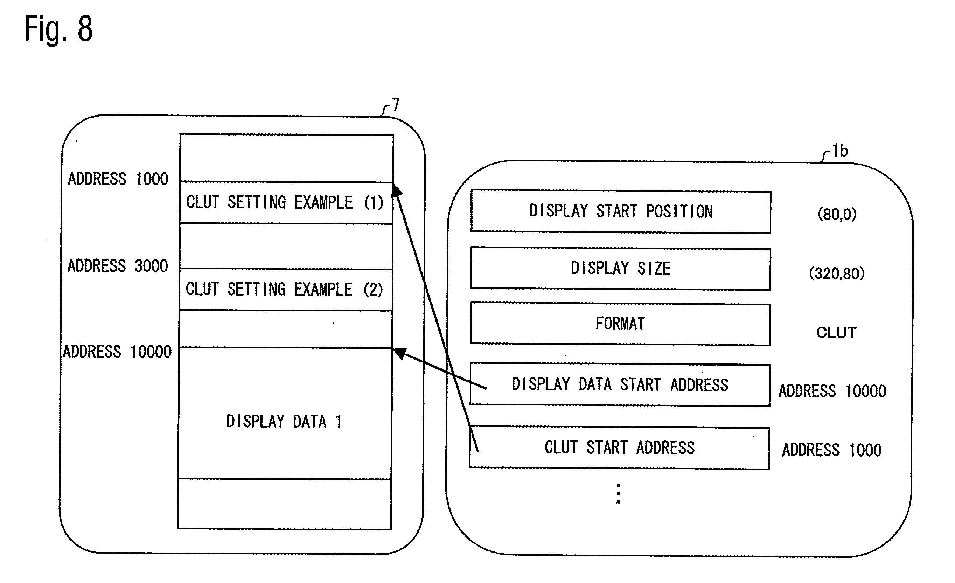

   Fig. 8 is a view showing an example of how a CLUT is applied.
Fig. 9

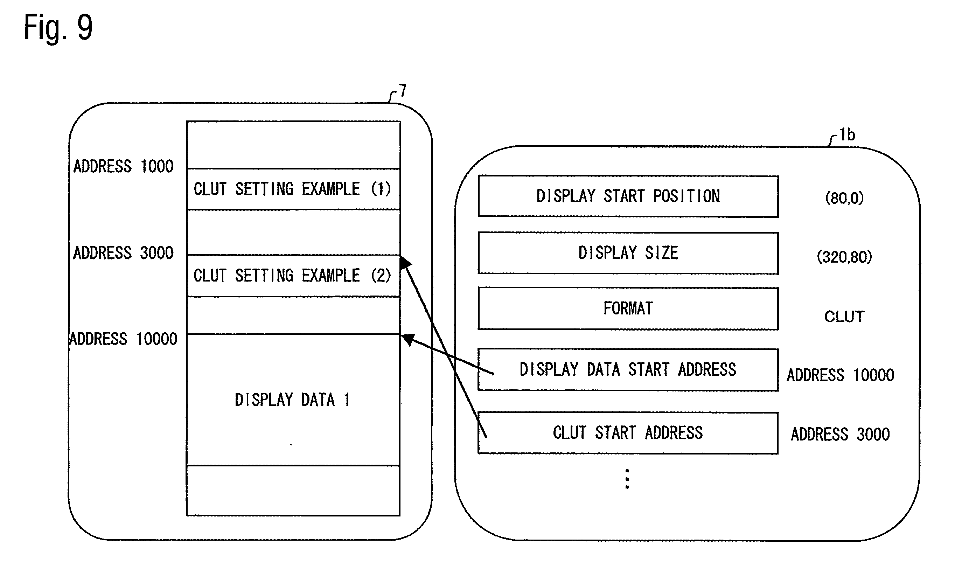

   Fig. 9 is a view showing an example of how a CLUT is applied.
Fig. 10

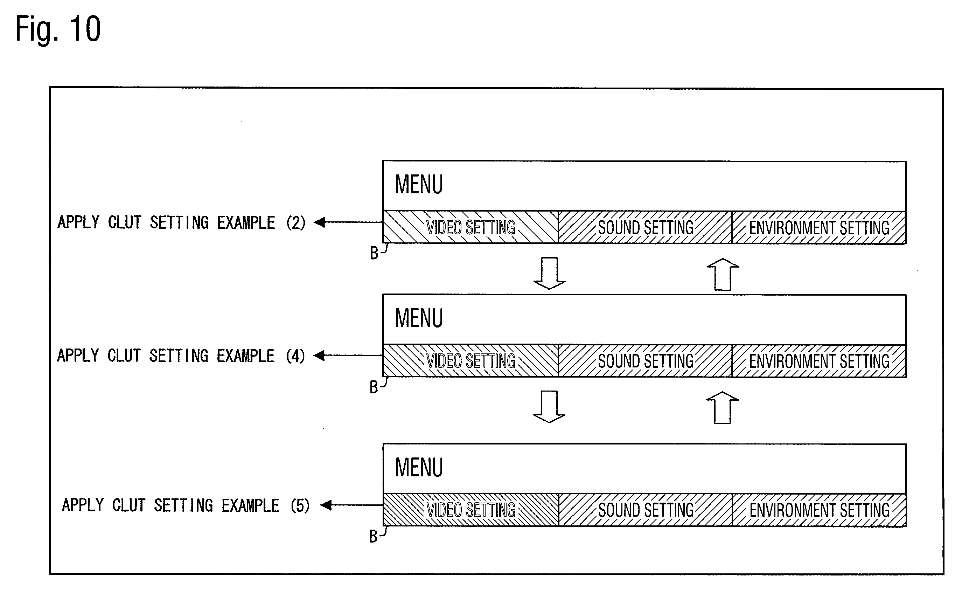

   Fig. 10 is a view illustrating an animation of a cursor.
Fig. 11

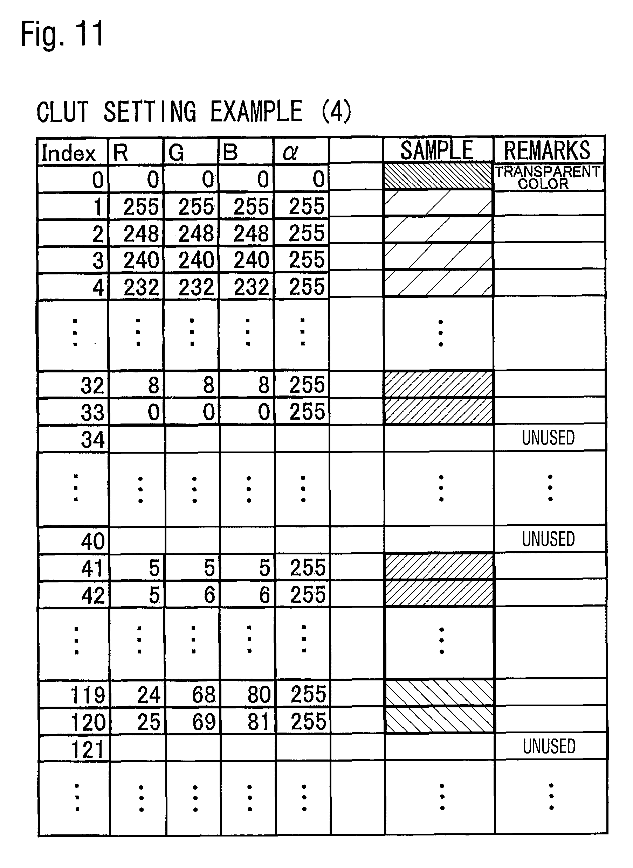

   Fig. 11 is a view showing a content of a CLUT setting example (4).
Fig. 12

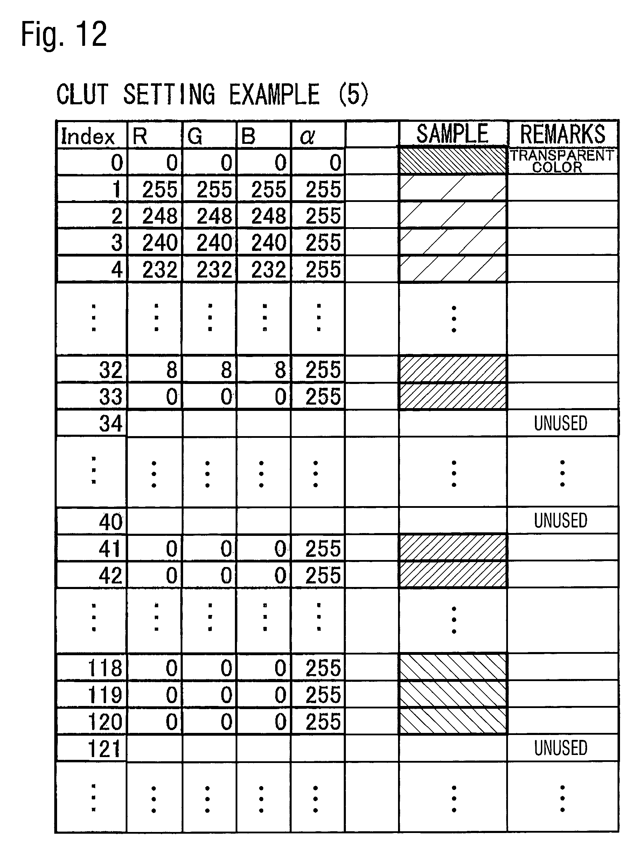

   Fig. 12 is a view showing a content of a CLUT setting example (5).
Fig. 13

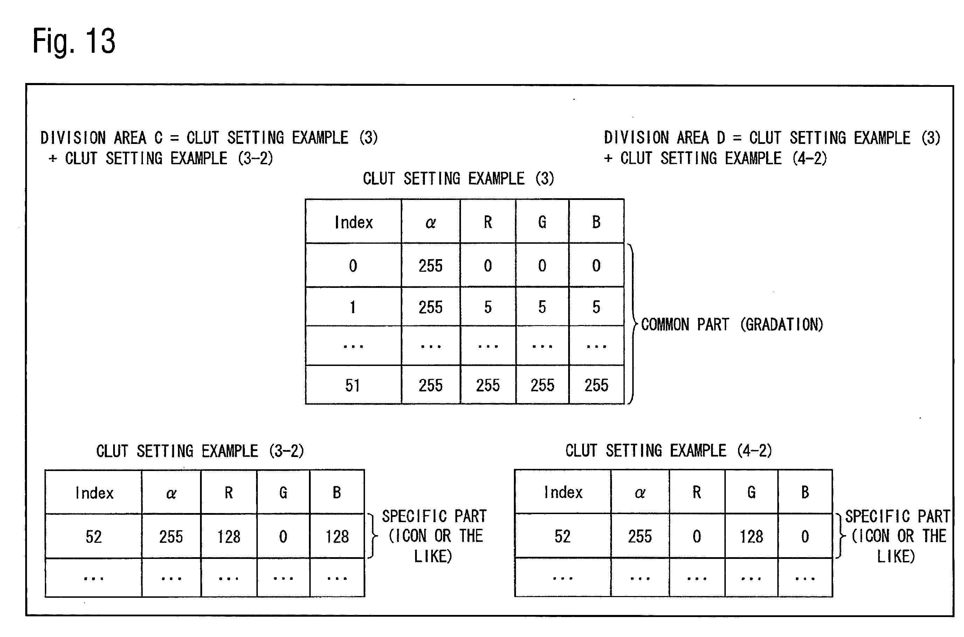

   Fig. 13 is a view for describing a modified example of the present invention.
Fig. 14

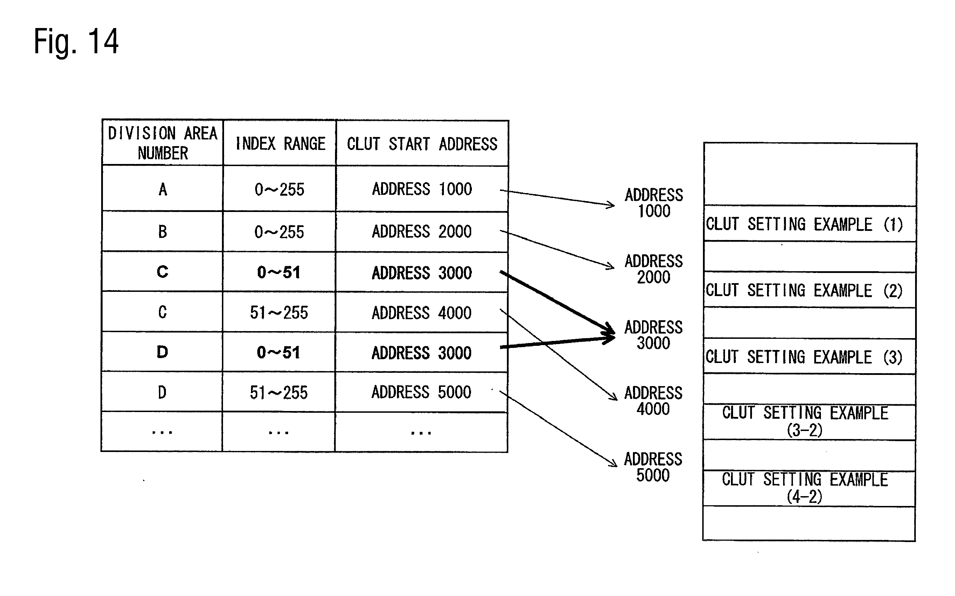

   Fig. 14 is a view for describing a modified example of the present invention.
Fig. 15

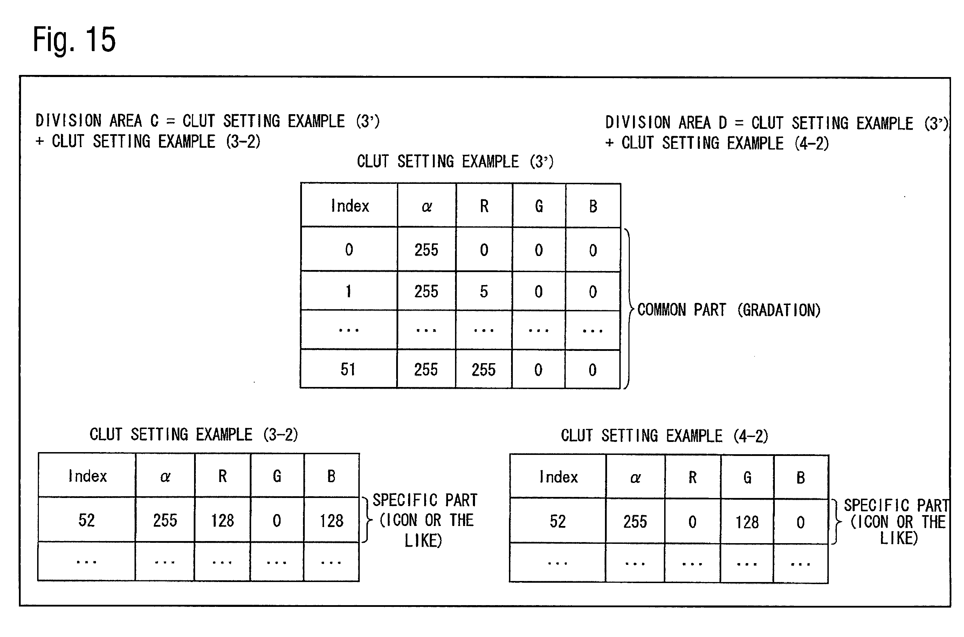

   Fig. 15 is a view for describing a modified example of the present invention.
Fig. 16
   Fig. 16 is a view showing a conventional technique.

### Description of Embodiments

An embodiment of the present invention will be described below with reference to Figs. 1 through 12. An image display device in accordance with the present invention can be used as a television receiver. A feature of the present invention particularly resides in an on-screen display mechanism in the image display device.

The following description will therefore first discuss an overall configuration of the image display device by describing a television receiver, which is an example of the image display device, and then discuss details of the on-screen display mechanism.

### (Configuration of Television Receiver)

Fig. 1 is a block diagram illustrating a configuration of a television receiver (image display device) in accordane with an embodiment of the present invention. The television receiver of the present embodiment is a television receiver which employs indexed color and has an on-screen display function.

In Fig. 1, the reference numeral 10 indicates a whole of a television receiver having a liquid crystal display device 22 with, for example, a screen size of 16 : 9 (1920 × 1080 dots). The television receiver 10 includes a CPU 50 and a memory 7 which are connected to a bus 51. An operation of the television receiver 10 is controlled by various control programs stored in the CPU 50 and the memory 7. In other words, the television receiver 10 illustrated in Fig. 1 is controlled by a computer system including the CPU 50. A program for causing the television receiver to be operated by the computer system is stored in the memory 7.

The memory 7 is generally constituted by a RAM, but may partly include a ROM. Also, the memory 7 may include a rewritable flash memory or the like. In the memory 7, an OS for causing a CPU to operate, various types of control software, or the like are stored as well as (i) data related to program information, such as EPG data, which has been received via a broadcast wave, (ii) image data for an OSD which image data is necessary for displaying an on-screen (OSD) image of information related to an electronic program guide or an operation of the television receiver, or (iii) the like . The memory 7 has a work area which functions as a working memory necessary for various control operations.

The television receiver 10 includes an analog tuner section 12 as well as a digital tuner section 14 (receiving means), so that an analog broadcast can be received. The television receiver 10 further includes an external input section 31. Various external devices 30 such as (i) a solid state memory such as an HDD, an SD card, and the like and (ii) a disk device such as a BD (blue ray disk), a DVD, and a CD can be connected to the external input section 31. In addition, a recording/reproducing section 32 for a BD, a DVD, and/or a CD is also included in a main body of the television receiver 10. The television receiver 10 further includes an IP broadcast tuner section 23, so that an IP broadcast can be received.

In addition, the television receiver 10 includes an AV switch section 13, a digital demodulation section 15, a separation section (DMUX) 16, a video decode/capture section 17, a video selector section 18, a video processing section 19, an adding circuit 20, a video output conversion section 21, a liquid crystal display device 22, an EPG/OSD/reservation processing section 24, an audio decode section 25, an audio selector section 26, a sound output conversion section 27, a speaker 28, a channel selecting section 33, a communication control section 34 and a remote controller light receiving section 35. An optical sensor (OPC sensor) 38 for detecting brightness around the television receiver 10 is also included in the television receiver 10.

The analog tuner section 12 selects a channel of an analog television broadcast signal to be received via an analog broadcast reception antenna 11. The analog tuner section 12 selects the channel in accordance with a channel selection instruction from the channel selecting section 33. A reception signal supplied from the analog tuner section 12 is separated by the AV switch section 13 into a sound signal and a video signal. The video signal is supplied to the video selector section 18, and the sound signal is supplied to the audio selector section 26.

The digital tuner section 14 selects a channel of a digital television broadcast signal to be received via a digital broadcast reception antenna 40. The digital tuner section 14 selects the channel in accordance with a channel selection instruction from the channel selecting section 33. A reception signal supplied from the digital tuner section 14 is demodulated by the digital demodulation section 15 and transmitted to the separation section (DMUX) 16.

The IP broadcast tuner section 23 selects a channel of an IP broadcast to be received via the communication control section 34 connected to a telephone line, a LAN, or the like. The IP broadcast tuner section 23 selects, in accordance with a channel selection instruction from the channel selecting section 33, a channel of a specific IP broadcast to be received, and transmits an output to the separation section (DMUX) 16.

The separation section (DMUX) 16 separates multiplexed data, which is made up of video data and sound data and has been supplied from the digital demodulation section 15 or the IP broadcast tuner section 23, into the video data and the sound data. The separation section (DMUX) 16 transmits the video data to the video decode/capture section 17, and transmits the sound data to the audio decode section 25. Further, the separation section (DMUX) 16 (i) extracts data, such as EPG data, included in a broadcast signal and (ii) transmits the data to the EPG/OSD/reservation processing section 24. Note that a broadcast wave signal extracted by the separation section (DMUX) 16 is recorded, if necessary, in the memory 7 under write control carried out by the CPU 6.

The video decode/capture section 17 decodes the video data which has been separated by the separation section (DMUX) 16. The video decode/capture section 17 also captures, as a still image, video information included in the video data. A video signal thus decoded by the video decode/capture section 17 is transmitted to the video selector section 18.

As mentioned before, the video selector section 18 contains the video signal which has been supplied from the analog tuner section 12 and the video signal which has been supplied from the external input section 31. The video selector section 18 (i) selects and outputs, in accordance with a control signal from the CPU 6, one of the video signals which have been supplied, and (ii) transmits the one of the video signals to the video processing section 19.

The video processing section 19 carries out various video processings with respect to a video signal supplied to the video processing section 19. Since a feature of the present invention resides in the video processing section 19, details of the video processing section 19 will be described later. For example, the video processing section 19 carries out a video processing such as noise reduction, sharpness adjustment, and contrast adjustment so as to convert video data so that a video signal which is optimal for the liquid crystal display device 22 is yielded.

The video output conversion section 21 is a part which includes a drive circuit for causing video data which has been received to be displayed on the liquid crystal display device 22. The image output conversion section 21 adds, to the video data supplied from the video processing section 19, (i) electronic program guide (EPG) data which has been supplied from the EPG/OSD/reservation processing section 24 and subjected to addition carried out by the adding circuit 20 or (ii) OSD (on-screen display) data which has been supplied from the EPG/OSD/reservation processing section 24 and subjected to addition carried out by the adding circuit 20. The image output conversion section 21 transmits image data thus obtained to the liquid crystal display device 22. The liquid crystal display device 22 displays, on a screen, the video data which has been transmitted to the liquid crystal display device.

The audio decode section 25 decodes the sound data separated by the separation section (DMUX) 16. The audio decode section 25 transmits the sound signal thus decoded to the audio selector section 26.

The audio selector section 26 (i) receives a sound signal from the AV switch section 13, a sound signal from the external input section 31 and a sound signal from the audio decode section 25, and (ii) selects a sound signal corresponding to the video signal which has been selected by the video selector section 18 in accordance with the control carried out by the CPU 6. The audio selector section 26 transmits the sound signal thus selected to the speaker 28 via the sound output conversion section 27. The sound output conversion section 27 (i) receives and converts the sound signal into a signal which is optimal for reproduction at the speaker 28 and (ii) supplies the signal to the speaker 28.

The remote controller light receiving section 35 receives an optical signal from a remote controller 36 so as to receive a control signal from the remote controller 36. A viewer gives, via the remote controller 36, an instruction such as (i) changing to scaling display (which is described later), (ii) selecting and determining various buttons during the scaling display, and (iii) the like.

The EPG/OSD/reservation processing section 24 creates an electronic program guide based on the EPG data which has been regularly updated and stored. The EPG/OSD/reservation processing section 24 creates OSD data by combining image data, character data, a basic figure, and the like based on predetermined layout information or the like. The OSD display structure, which is a feature of the present invention, is realized mainly at the EPG/OSD/reservation processing section 24. The OSD data is data for drawing, for example, various types of information such as a setting menu screen, a sound volume gauge, current time and selectable channels, which information is stored in the memory 7 in advance. In addition, the EPG/OSD/reservation processing section 24 carries out a program reservation processing or the like by using the electronic program guide.

The communication control section 34 carries out control so that a communication is established via a network such as a telephone line, a LAN or the Internet.

The description above discussed an example of a television receiver in particular. It should be apparent, however, that the present invention can be applied to a case in which television is received on a portable device such as a portable phone, a car navigation system, or a portable game device.

Next, the following description will discuss an OSD processing (method for displaying an on-screen display image) carried out in the EPG/OSD/reservation processing section 24, which OSD processing is a feature of the present invention.

### (OSD Mechanism in EPG/OSD/Reservation Processing Section)

A concrete configuration of the EPG/OSD/reservation processing section 24 illustrated in Fig. 1 is described with reference to Fig. 2. Note that a block diagram shown in Fig. 2 illustrates only a configuration that is related to an OSD, and a configuration that is related to an EPG and a configuration that is related to reservation will be omitted.

As illustrated in Fig. 2, an OSD processing in the EPG/OSD/reservation processing section 24is carried out by use of a color lookup table application section 1 (applying means), a color lookup table control section 2 (table converting means), and an OSD drawing control section 3.

The color lookup table (hereafter referred to as CLUT) application section 1 divides one OSD area into a plurality of predetermined division areas, and applies CLUTs to the respective plurality of division areas (application step). Fig. 3 is a view illustrating a state in which CLUTs are applied to respective division areas. In an example illustrated in Fig. 3, one OSD area is divided in four so as to generate division areas A, B, C and D. Information on how one OSD area is divided is stored in the memory 7 (Fig. 1) in advance.

Furthermore, the CLUT application section 1 applies a CLUT setting example (1) to the division area A, a CLUT setting example (2) to the division area B, a CLUT setting example (3) to the division area C, and the CLUT setting example (3) also to the division area D. A CLUT is a table in which 256 elements (some of the 256 elements are omitted in each of Figs. 4 through 8), each of which represents an 8-bit pixel value stored in the memory 7, are converted into 24-bit values each of which is constituted by red (R), green (G), and blue (B) which respectively correspond to an R component, a G component, and a B component of a picture in an RGB format. A content of a CLUT of the CLUT setting example (1) is shown in Fig. 4, a content of a CLUT of the CLUT setting example (2) is shown in Fig. 5, and a content of a CLUT of the CLUT setting example (3) is shown in Fig. 6.

Note that α in each of the CLUTs represents a blend value of an OSD image. As means for displaying an OSD image in such a manner that the OSD image is superimposed on an image frame (hereafter referred to as a video image) of such as television, a video, or the like, the simplest method is to replace a pixel of a video image with a pixel of the OSD image at a position where the OSD image is to be displayed. At this time, it is possible to display a more colorful image by adding up (i) a product of color information of a video pixel and a coefficient (the coefficient is called a blend value) and (ii) a product of color information of an OSD pixel and the coefficient, in stead of simply replacing pixels. α is within a range of 0 ≤ α ≤ 1.

In the division area A illustrated in Fig. 3, a "Menu" part is constituted by icon data having 48 colors, and a part other than the "Menu" part is black. Accordingly, in the CLUT setting example (1), as shown in Fig. 4, colors used in a "Menu" icon are assigned to respective index numbers 1 through 48.

As to color settings of the division areas B, C, and D, characters "VIDEO SETTING" in the division area B, characters "SOUND SETTING" in the division area C, and characters "ENVIRONMENT SETTING" in the division area D are each displayed by use of a gray scale font of 32 gray scales, to which respective different colors can be assigned. In the example illustrated in Fig.3, the division area B has been selected by means of a cursor, and a font color of "VIDEO SETTING" and a background color in the division area B are white and black, respectively. As such, 32 colors which represent 32 color ranges, into which a color range from a white color to a black color is equally divided, are assigned to respective gray scale colors. In the CLUT shown in Fig. 5, the 32 colors are assigned to index numbers 1 through 32.

In the present embodiment, each of the division areas B, C and D has a height represented by 80 pixels. As such, in a case where, as illustrated in Fig. 3, a division area has a gradation pattern in a longitudinal direction on the sheet of Fig. 3, use of 80 colors allows different colors to be assigned to respective lines. This enables a color expression equivalent to a full-color (24-bit color) expression. The 80 colors for gradation are assigned to index numbers 41 through 120.

The following description will discuss details of a CLUT application processing in which the CLUT application section 1 is used.

The CLUT application section 1 includes an OSD display setting section 1a, an OSD conversion processing section 1b, and an OSD combining processing section 1c, as shown in Fig. 2.

In order to apply a CLUT to each of the division areas, a screen to be displayed on an OSD is first created on the memory 7 (RAM) (i) by use of image data stored in the memory 7 (internal storage device or RAM) and (ii) in accordance with a control command from the CPU 6 or the OSD drawing control section 3. Here, an example of a process carried out by the OSD drawing control section 3 encompasses a copying process, a process for drawing a figure such as a rectangle, and an α blending process. Note that such a process can be realized by means of a software process via the CPU 6, and therefore may not be realized by means of hardware.

Next, the OSD display setting section 1a determines a setting as to which CLUT is to be applied in each of the division areas. Specifically, the OSD display setting section 1a creates an output image by interpreting, on the basis of (i) a display format (an RGB format, a YCbCr format, a CLUT format, or the like) having been set and (ii) a size having been set, data stored in an area of an address in the memory 7 (RAM), which address is a display start position. In one case, the display start position is always assigned to a specific address. In another case, OSD display area setting means is provided so that an arbitrary address can be set. Here, in a case where the image display device is a television receiver as in the present embodiment, it may become necessary to display simultaneously a plurality of different OSD screens such as a GUI screen, a caption screen, a data broadcasting screen, and the like. To cope with such a case, the CLUT application section 1 includes the OSD display setting section(s) 1a, the number of which is n (n is an integer that varies depending on a hardware structure). The OSD combining processing section 1c has a function of (i) combining pieces of OSD screen information, which have been set to the respective OSD display setting sections (1) through (n), into a single screen in accordance with a set value (an order of overlapping or the like) and (ii) outputting the single screen. Note that the OSD combining processing section 1c may refer to an α values stored in respective pixels so as to combine the pieces of OSD screen information in accordance with a ratio of the α values (that is, the OSD combining processing section 1c has an α blend function).

Note that an OSD is expressed in various formats such as an RGB format, a YCbCr format, a CLUT format. As such, in a case where, for example, the OSD display setting section (1) of the OSD display setting section 1a employs the RGB format and the OSD display setting section (n) employs the CLUT format, the pieces of OSD screen information cannot be simply combined. To cope with such a case, the CLUT application section 1 includes the OSD conversion processing section 1b which converts various OSD formats into a common format. In a case of an OSD in the CLUT format, the OSD conversion processing section 1b (i) compares each pixel data (index value of a CLUT) stored in the memory 7 (RAM) with CLUT data, and (ii) converts the OSD in the CLUT format into data in the RGB format. The data in the RGB format can be further converted into data in the YCbCr format, in a case where the data in the RGB format, when combined with video data, needs to be outputted in the YCbCr format.

In the end, a signal outputted from the OSD combining processing section 1c is superposed on the video data. Information of video thus combined is (i) converted by the video output conversion section 21 into an electric signal that can be recognized by an output device and (ii) displayed on the liquid crystal display device 22 (Fig. 1) such as a liquid crystal display.

Note that a method of dividing an OSD image into a plurality of areas can be realized as far as areas set by the OSD display setting section 1a do not overlap.

Next, the following description will discuss a method in which a cursor movement from the division area B "VIDEO SETTING" to the division area C "SOUND SETTING" is achieved by means of pallet animation in a case of the settings as illustrated in Fig.3. This is realized by the color lookup table control section 2 shown in Fig. 2 (table conversion step).

First, the CLUT which has been applied to the division area B is changed from the CLUT setting example (2) (a first color lookup table) to the CLUT setting example (3) (a second color lookup table). Then, the CLUT which has been applied to the division area C is changed from the CLUT setting example (3) (a first color lookup table) to the CLUT setting example (2) (a second color lookup table). This simple method realizes the pallet animation, so that a cursor movement as shown in Fig. 7 can be realized.

As for a method for changing (updating) the CLUT setting example, in a case where data of CLUTs are stored in the memory 7, the CLUT setting example can be changed (updated) by rewriting data in a data area in the memory 7 which data area is allocated for the CLUT.

Note, however, that the method for changing (updating) a CLUT setting example is not limited to this. In a case where means which can freely change a setting of a starting address of a CLUT is provided, the CLUT can be updated also by dynamically updating only the starting address. In case where information on an address of a CLUT is stored in the OSD display setting section 1a as shown in Fig. 8, provision of means for dynamically updating the address information allows a CLUT setting example to be changed (updated). In this case, as shown in Figs. 8 and 9, by (i) storing CLUT setting examples in respective different areas in advance and (ii), when a CLUT update is required, rewriting only the information on a starting address of the CLUT which information is stored in the OSD display setting section, it becomes possible to update display at a high speed without changing a data area for the CLUT at all, let alone changing display data itself.

Note that a place in which the CLUT data is stored is not limited to a main memory, and the CLUT data can be stored, for example, in a cache incorporated in an integrated circuit (IC).

Note that selection of a CLUT setting example to which a CLUT is to be converted is controlled by the CPU 6 (Fig. 1).

A process carried out by the CLUT control section 2 can be realized also by a software process via the CPU 6 (table converting means), and therefore may not be realized by means of hardware.

### (Operation Effect of The Present Embodiment)

As described above, according to the configuration of the present embodiment, provision of the CLUT application section 1 allows CLUTs to be applied to respective division areas, which is obtained by dividing an OSD area into a plurality of areas. This makes it possible to achieve, without increasing a memory bandwidth, a display quality having a high resolution as compared with a configuration which employs indexed color and in which only one CLUT is applied to a whole of an OSD area.

In addition, according to the configuration of the present embodiment, a CLUT update section 2 for changing a CLUT, which has been applied, to another CLUT is provided. This eliminates the need for changing original image data, and drawing can be speeded up, accordingly. Particularly, since a table update section 2 has such a CLUT update function for each of the division areas A through D, a cursor movement in the OSD can be expressed by means of palette animation. Further, even in a case where, for example, gradation is used in a background color of the OSD, provision of the CLUT update function for each of the division areas A through D can achieve, without increasing a memory bandwidth, a color expression equivalent to that in a full-color mode.

Possible examples of a method for updating display include at least the following three methods:
(Method A) Rewriting display data itself,
(Method B) Rewriting only CLUT data (palette animation),
(Method C) Rewriting only a starting address of the CLUT.
Under a condition that each of the CLUT data, the display data, and the starting address is rewritten at a constant speed, the (Method C) has the shortest processing time among the three methods below, and the (Method B) has the second shortest processing time. Both of the (Method C) and the (Method B), which are included in the present invention, can achieve a reduction in processing time as compared with a technique of rewriting the display data itself.

In the present embodiment, a CLUT setting example is converted into another CLUT setting example. Note, however, that the present invention is not limited to this, and can employ a configuration in which a CLUT whose content is partially changed is used as "another CLUT."

The description above discussed the present invention by giving an example of an OSD which is displayed in accordance with indexed color. Note, however, that it is possible to make combined use of (i) an OSD whose region has been divided and (ii) another OSD (in a CLUT mode or an RGB format) and simultaneously display the OSD and the another OSD. For example, an aspect of the present invention can be such that (i) a menu screen is realized by means of the OSD whose area has been divided, (ii) a Web browser display is realized by means of a full color plane in an RGB format, and (iii) the menu screen and the Web browser display are superimposed on each other and displayed.

### (Modified Example <1> of OSD Mechanism)

In the present embodiment as described above, a technique of moving a cursor by means of palette animation was discussed. Note, however, that the present invention is not limited to this, and can employ a configuration in which, in a case where the cursor is at the division area B "VIDEO SETTING", a color of the cursor in the division area B is dynamically changed as illustrated in Fig. 10.

Specifically, in Fig. 10, a gradation part of the division area B is dynamically changed by applying CLUT setting examples in an order of the CLUT setting example (2), the CLUT setting example (4), and the CLUT setting example (5) and vice versa. That is, a first CLUT setting example is converted to a second CLUT setting example via one or more CLUT setting examples, each of which is different from either one of the first CLUT setting example and the second CLUT setting example. A CLUT content of the CLUT setting example (4) is shown in Fig. 11, and a CLUT content of the CLUT setting example (5) is shown in Fig. 12.

This configuration allows the user to know more easily where the cursor is positioned.

In the present modified example, a change is caused by means of the three patterns of CLUT settings examples (2), (4), and (5). Note, however, that the present modified embodiment is not limited to this. For example, it is possible to cause a smoother change by adding, between the CLUT setting examples (2), (4), and (5), another CLUT setting example which is a middle state between the states of the respective CLUT setting examples (2), (4), and (5).

### (Modified Example <2> of OSD Mechanism)

The above descriptions of the present embodiment and Modified Example <1> discussed an aspect in which (i) one CLUT setting example is applied to one division area, and (ii) the CLUT setting example is changed to another CLUT setting example. Note, however, that the present invention is not limited to this. The following description will discuss Modified Example <2>.

In Modified Example <2>, color lookup tables, each of which is obtained by combining a plurality of partial color lookup tables, are applied to respective at least two division areas. The color lookup tables, applied to the respective at least two division areas, include respective partial color lookup tables which are identical with each other.

Specifically, as shown in Fig. 13, a color lookup table, which is obtained by combining a CLUT setting example (3) for index numbers 1 through 51 and a CLUT setting example (3-2) for index numbers 52 through 255, is applied to the division area C. A color lookup table, which is obtained by combining the CLUT setting example (3) for index numbers 1 through 51 and a CLUT setting example (4-2) for index numbers 52 to 255, is applied to the division area D (application step).

The CLUT setting example (3) shared by the division areas C and D is a part constituting a background of a display image. As shown in Fig. 14, the same address (address 3000), which is an address of the CLUT setting example (3), is set as a CLUT start address for the area C and a CLUT start address for the area D.

The CLUT start address set to the division area C with respect to the CLUT setting example (3) and the CLUT start address set to the division area D with respect to the CLUT setting example (3) are thus identical with each other. For this reason, by changing, by means of the color lookup table control section 2 shown in Fig. 2, the CLUT setting example (3) to a CLUT setting example (3') (as in the present embodiment and Modified Example <1> as described above), it is possible to change, simultaneously, color information of the background of the display image in the division area C and color information of the background of the display image in the division area D, which backgrounds are identical with each other (table conversion step).

Note that a partial color lookup table to be shared is not limited to a partial color lookup table applied to a background color of a button. That is, for example, a partial color lookup table applied to a font color of a button can be shared, or a partial color lookup table applied to a background color or a font color of a UI element (a title bar of a window, a pop-up menu, a dialog box, or the like) other than the button can be shared.

Timing of changing a color lookup table can be timing when a user gives an instruction to change a color scheme, but is not limited to this. For example, it is possible to employ a configuration in which the television receiver 10 changes a color lookup table in response to an instruction to change the color lookup table, which instruction is included in a broadcast wave supplied from a broadcast station. The configuration is effective in a case where, for example, a coloration of the UI element, which is used when character information or the like of a data broadcast is displayed on an OSD image, is controlled by the broadcast station side. It is also possible to employ a configuration in which the television receiver 10 updates a color lookup table in response to a CEC command (a vendor command for giving an instruction to change a color lookup table) supplied from an external device (a recorder, a smart phone, a handheld terminal, an electronic book reader, or the like) which is HDMI-connected to the television receiver 10. The configuration is effective in a case where a coloration of a UI element displayed by the television receiver 10 itself is matched with a coloration of a UI element which the external device, which is HDMI-connected to the television receiver 10, causes the television receiver 10 to display. Note that these configurations can be applied also to timing of changing a color lookup table in the embodiment and Modified Example <1> as described above.

According to the configuration of Modified Example <2>, a partial color lookup table that can be shared by division areas is shared. This allows a reduction in amount of a memory used.

In a case where, for example, different color lookup tables are applied to respective division areas (although there is a color lookup table which can be shared by the division areas), table conversion is carried out on a division area-by-division area basis. This may negatively affect display quality by undesirably (i) making a displayed image look strange due to a time lag between the division areas or (ii) leaving a division area unconverted. With the configuration of Modified Example <2>, partial color lookup tables in respective division areas, which partial color lookup tables are identical with each other, can be controlled by use of the same address information. As such, a change in address information in the table conversion step causes the partial color lookup tables, which are identical with each other, in the respective division areas to be converted each to another partial color lookup table at once. This eliminates the time lag as described above, so that conversion can be carried out in a short time. In addition, there is no unconverted division area as described above, so that display quality can be improved. Furthermore, a problem that only one part is accidentally left is prevented.

### (Program and Recording Medium)

Lastly, the video processing section 19 included in the television receiver 10 can be (i) configured as a hardware logic or (ii) realized by means of software by use of a CPU (Central Processing Unit) as described below.

That is, the television receiver 10 includes a CPU for executing commands of a program for implementing each function, a ROM (Read Only Memory) in which the program is stored, a RAM (Random Access Memory) in which the program is loaded so as to be executed, and a storage device (recording medium), such as a memory, in which the program and various data are stored, and the like. According to the configuration, an object of the present invention can be attained by a predetermined recording medium.

In the recording medium, program code (an execution program, an intermediate code program, and a source program) of the program (software for implementing the functions) of the television receiver 10 is recorded so as to be read out by a computer. The recording medium can be supplied to the television receiver 10 so as to cause the television receiver 10 (or a CPU or an MPU) as the computer to read out and execute the program code recorded in the recording medium supplied.

The recording medium via which the program code is supplied to the television receiver 10 is not limited to any specific structure or type. That is, for example, a tape such as a magnetic tape or a cassette tape, a disk including (i) a magnetic disk such as a floppy® disk or a hard disk and (ii) an optical disc such as a CD-ROM, an MO, an MD, a DVD, or a CD-R, a card such as an IC card (including a memory card) or an optical card, a semiconductor memory such as a mask ROM, an EPROM, an EEPROM, or a flash ROM, or the like can be used as the recording medium.

The object of the present invention can be achieved by arranging the television receiver 10 to be connectable to a communications network so that the program code may be delivered over the communications network. The communications network is not limited to any particular type or in any particular manner as long as the program code can be delivered to the television receiver 10. The communications network may be, for example, the Internet, an intranet, extranet, LAN, ISDN, VAN, CATV communications network, virtual dedicated network (virtual private network), telephone line network, mobile communications network, or satellite communications network.

The transfer medium which makes up the communications network is not limited to any particular arrangement or type provided that the transfer medium is a given medium that can transfer the program code. The transfer medium may be, for example, wired line, such as IEEE 1394, USB (Universal Serial Bus), electric power line, cable TV line, telephone line, or ADSL (Asymmetric Digital Subscriber Line) line; or wireless, such as infrared radiation (IrDA, remote control), Bluetooth (Registered Trademark), 802.11 wireless, HDR, mobile telephone network, satellite line, or terrestrial digital network. The present invention encompasses a form of a computer data signal embedded into a carrier wave, in which form the program code is realized by electronic transmission.

The present invention is not limited to the above-described embodiments but allows various modifications within the scope of the claims. In other words, the embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### [Conclusion of the present invention]

An image display device in accordance with the present invention is an image display device having an on-screen display function and employing indexed color, including: applying means for applying color lookup tables to a respective plurality of division areas, into which an on-screen display area has been divided; and table converting means for converting, in each of at least one of the plurality of division areas, the applied color lookup table from a first color lookup table to a second color lookup table which is different from the first color lookup table.

According to the configuration, color lookup tables are applied to the respective plurality of division areas, into which the on-screen display area has been divided in the image display device in accordance with the present invention. This makes it possible to achieve, without increasing a memory bandwidth, a display quality having a high resolution as compared with a configuration which employs indexed color and in which only one color lookup table (CLUT) is applied to a whole of an on-screen display area.

In addition, according to the configuration, the image display device of the present invention includes table converting means for replacing a CLUT, which has been applied, with another CLUT. This eliminates the need for changing original image data, and drawing can be speeded up, accordingly.

Particularly, since the table converting means has such a CLUT update function for each of the plurality of division areas, a cursor movement in the OSD can be expressed by means of palette animation.

Further, even in a case where, for example, gradation is used in a background color of the OSD, provision of the CLUT update function for each of the plurality of division areas can achieve, without increasing a memory bandwidth, a color expression equivalent to that in a full-color mode.

In addition, in Patent Literature 2 described above, the background image, the window A, and the window B are provided with respective different color lookup tables, and a whole area of each of the color lookup tables is rewritten on a line-by-line basis. According to the configuration of the present invention, (i) color lookup tables are applied to the respective plurality of division areas on a division area-by-division area basis, into which plurality of division areas an on-screen display area has been divided, and (ii) a type of a lookup table can be changed in at least one of the plurality of division areas.

Further, in addition to the above configuration, it is preferable that the image display device in accordance with the present invention further includes storage means for storing a plurality of data each constituting a color lookup table, wherein: pieces of address information are stored in the applying means, each of the pieces of address information being indicative of a place in the storage means in which place one of the plurality of data is stored; and the table converting means rewrites each of the pieces of address information stored in the applying means.

According to the configuration, it is possible to change (update) a CLUT by changing only the address information indicative of the place in which the data constituting the CLUT is stored. This enables a reduction in processing time as compared with a case in which display data itself is rewritten and with a case in which CLUT data itself is rewritten.

Note, however, that the image display device in accordance with the present invention is not limited to the configuration. The table converting means converts the applied color lookup table from the first color lookup table to the second color lookup table via one or more color lookup tables each of which is different from either one of the first color lookup table and the second color lookup table.

According to the configuration, the image display device in accordance with the present invention not only enables a cursor movement in the OSD to be expressed by means of palette animation but also allows a color of the cursor to be changed in an area of the OSD where the cursor is positioned. This allows a user to recognize easily where the cursor is positioned.

Further, in addition to the above configuration, the image display device in accordance with the present invention can employ a configuration in which (i) the applying means applies color lookup tables to the respective plurality of division areas, each of the color lookup tables being obtained by combining a plurality of partial color lookup tables, (ii) the table converting means converts, in each of at least two of the plurality of division areas, the applied color lookup table from a first color lookup table to a second color lookup table which is different from the first color lookup table, (iii) the image display device further includes storage means for storing a plurality of data each constituting a color lookup table, (iv) pieces of address information are stored in the applying means, each of the pieces of address information being indicative of a place in the storage means in which place one of the plurality of data is stored, (v) same pieces of information are stored in the applying means, each of the same pieces of information being indicative of a place in which data of a partial color lookup table to be applied commonly to the at least two of the plurality of division areas is stored, and (vi) the table converting means changes the same pieces of information stored in the applying means.

According to the configuration, a partial color lookup table that can be shared by division areas is shared. This allows a reduction in amount of a memory used.

In a case where, for example, different color lookup tables are applied to respective division areas (although there is a color lookup table which can be shared by the division areas), table conversion is carried out on a division area-by-division area basis. This may negatively affect display quality by undesirably (i) making a displayed image look strange due to a time lag between the division areas or (ii) leaving a division area unconverted. By providing the configuration above to the present invention, however, partial color lookup tables in respective division areas, which partial color lookup tables are identical with each other, can be controlled by use of the same address information. As such, a change in the address information by means of the table converting means causes the partial color lookup table (the first color lookup table), which is shared by the division areas, to be converted to another partial color lookup table (second color lookup table) at once. This eliminates the time lag as described above, so that conversion can be carried out in a short time. In addition, there is no unconverted division area as described above, so that display quality can be improved. Accordingly, when a cursor is moved between display areas so as to select various operation icons, operation menus, or the like, a time lag between the display areas can be reduced. This enables an improvement in display quality.

In order to attain the object, a method for displaying an on-screen display image in accordance with the present invention is a method for displaying an on-screen display image by use of an image display device which has an on-screen display function and employs indexed color, said method including the steps of: (i) applying color lookup tables to a respective plurality of division areas, into which an on-screen display area has been divided, so as to display the on-screen image; and (ii) converting, in each of at least one of the plurality of division areas, the applied color lookup table from a first color lookup table to a second color lookup table which is different from the first color lookup table.

According to the configuration, in the method for displaying an on-screen display image in accordance with the present invention, color lookup tables are applied to the respective plurality of division areas on a division area-by-division area basis, into which plurality of division areas the on-screen display area has been divided. This makes it possible to achieve, without increasing a memory bandwidth, a display quality having a high resolution as compared with a configuration which employs indexed color and in which only one color lookup table (CLUT) is applied to a whole of an on-screen display area.

In addition, according to the configuration, the method for displaying an on-screen display image in accordance with the present invention includes the step (ii) for replacing a CLUT, which has been applied, with another CLUT. This eliminates the need for changing original image data, and drawing can be speeded up, accordingly.

Particularly, in the step (ii), since such a CLUT update function is provided for each of the plurality of division areas, a cursor movement in the OSD can be expressed by means of, for example, palette animation.

Further, even in a case where, for example, gradation is used in a background color of the OSD, provision of the CLUT update function for each of the plurality of division areas can achieve, without increasing a memory bandwidth, a color expression equivalent to that in a full-color mode.

In addition to the above structure, it is preferable that the method for displaying an on-screen display image in accordance with the present invention employs a configuration in which the step (i) includes applying a specific color lookup table on the basis of address information indicative of a place in which data constituting a color lookup table is stored; and the step (ii) includes rewriting the address information to be used in the step (i).

According to the configuration, it is possible to change (update) a CLUT by changing only the address information indicative of the place in which the data constituting the CLUT is stored. This enables a reduction in processing time as compared with a case in which display data itself is rewritten and with a case in which CLUT data itself is rewritten.

Note, however, that the method for displaying an on-screen display image in accordance with the present invention is not limited to the above configuration. The step (ii) can include converting the applied color lookup table from the first color lookup table to the second color lookup table via one or more color lookup tables each of which is different from either one of the first color lookup table and the second color lookup table.

According to the configuration, the method for displaying an on-screen display image in accordance with the present invention not only enables a cursor movement in the OSD to be expressed by means of palette animation but also allows a color of the cursor to be changed in an area of the OSD where the cursor is positioned. This allows a user to recognize easily where the cursor is positioned.

The method for displaying an on-screen display image in accordance with the present invention can further employ a configuration in which (a) the step (i) includes applying color lookup tables, each of which is obtained by combining a plurality of partial color lookup tables, and applying a specific color lookup table on the basis of address information indicative of a place in which data constituting a color lookup table is stored, (b) the step (ii) including converting, in each of at least two of the plurality of division areas, the applied color lookup table from a first color lookup table to a second color lookup table which is different from the first color lookup table, (c) pieces of address information each of which is indicative of a place in which data constituting one of the plurality of partial color lookup tables shared by the at least two of the plurality of division areas are identical with each other, and (d) the step (ii) includes rewriting the pieces of address information, which are identical with each other and used in the step (i).

According to the configuration, a partial color lookup table that can be shared by division areas is shared. This allows a reduction in amount of a memory used.

In a case where, for example, different color lookup tables are applied to respective division areas (although there is a color lookup table which can be shared by the division areas), table conversion is carried out on a division area-by-division area basis. This may negatively affect display quality by undesirably (i) making a displayed image look strange due to a time lag between the division areas or (ii) leaving a division area unconverted. By providing the configuration above to the present invention, however, partial color lookup tables in respective division areas, which partial color lookup tables are identical with each other, can be controlled by use of the same address information. As such, a change in the address information in the step (ii) causes the partial color lookup table (the first color lookup table), which is shared by the division areas, to be converted to another partial color lookup table (second color lookup table) at once. This eliminates the time lag as described above, so that conversion can be carried out in a short time. In addition, there is no unconverted division area as described above, so that display quality can be improved.

Further, the image display device in accordance with the present invention may be a television receiver.

In order to attain the object, a program of the present invention is a program for activating a computer as each means of the image display device. In order to attain the object, a computer-readable storage medium of the present invention is a computer-readable storage medium in which the program is recorded.

According to this, a program having an interface with an improved operability and a storage medium in which the program is recorded can be provided.

### Industrial Applicability

The present invention can be, for example, optimally used as a display device such as a multi-function television receiver, or the like, and therefore has great potential for industrial application.

### Reference Signs List

1: Color lookup table application section (applying means)
1a: OSD display setting section
1b: OSD conversion processing section
1c: OSD combining processing section
2: Color lookup table control section (table converting means)
3: OSD drawing control section
6: CPU (table converting means)
7: Memory (storage means)
10: Television receiver (image display device)
11: Antenna
12: Analog tuner section
13: AV switch section
14: Digital tuner section
15: Digital demodulation section
16: Separation section
17: Video decode / capture section
18: Video selector section
19: Video processing section
20: Adding circuit
21: Video output conversion section
22: Liquid crystal display device
23: IP broadcast tuner section
24: EPG/OSD/reservation processing section
25: Audio decode section
26: Audio selector section
27: Sound output conversion section
28: Speaker
30: External device
31: External input section
32: Recording/ reproducing section
33: Channel selection section
34: Communication control section
35: Remote controller light receiving section
36: Remote controller
36: Remote controller
38: Optical sensor
40: Digital broadcast reception antenna
50: CPU
51: Bus
A through D: Division area

## Claims

1. An image display device having an on-screen display function and employing indexed color, comprising:
applying means for applying color lookup tables to a respective plurality of division areas, into which an on-screen display area has been divided; and
table converting means for converting, in each of at least one of the plurality of division areas, the applied color lookup table from a first color lookup table to a second color lookup table which is different from the first color lookup table.

2. An image display device as set forth in claim 1, further comprising storage means for storing a plurality of data each constituting a color lookup table, wherein:
pieces of address information are stored in the applying means, each of the pieces of address information being indicative of a place in the storage means in which place one of the plurality of data is stored; and
the table converting means rewrites each of the pieces of address information stored in the applying means.

3. The image display device as set forth in claim 1 or 2, wherein:
the table converting means converts the applied color lookup table from the first color lookup table to the second color lookup table via one or more color lookup tables each of which is different from either one of the first color lookup table and the second color lookup table.

4. The image display device as set forth in any one of claims 1 through 3, wherein:
the applying means applies color lookup tables to the respective plurality of division areas, each of the color lookup tables being obtained by combining a plurality of partial color lookup tables;
the color lookup tables, applied to the respective plurality of division areas, include respective partial color lookup tables which are identical with each other; and
at the time of converting the identical partial color lookup table from a first partial color lookup table to a second partial color lookup table, the table converting means rewrites same pieces of address information out of the pieces of address information stored in the applying means, the same pieces of address information being indicative of a place in which data constituting the identical partial color lookup table is stored.

5. A method for displaying an on-screen display image by use of an image display device which has an on-screen display function and employs indexed color,
said method comprising the steps of:
(i) applying color lookup tables to a respective plurality of division areas, into which an on-screen display area has been divided; and
(ii) converting, in each of at least one of the plurality of division areas, the applied color lookup table from a first color lookup table to a second color lookup table which is different from the first color lookup table.

6. The method for displaying an on-screen display image as set forth in claim 5, wherein:
the step (i) includes applying a specific color lookup table on the basis of address information indicative of a place in which data constituting a color lookup table is stored; and
the step (ii) includes rewriting the address information to be used in the step (i).

7. The method for displaying an on-screen display image as set forth in claim 5 or 6, wherein:
the step (ii) includes converting the applied color lookup table from the first color lookup table to the second color lookup table via one or more color lookup tables, each of which is different from either one of the first color lookup table and the second color lookup table.

8. The method for displaying an on-screen display image as set forth in any one of claims 5 through 7, wherein:
the step (i) includes applying color lookup tables to the respective plurality of division areas, each of the color lookup tables being obtained by combining a plurality of partial color lookup tables;
the color lookup tables, applied to the respective plurality of division areas, include respective partial color lookup tables which are identical with each other; and
the step (ii) includes rewriting, at the time of converting the identical partial color lookup table from a first partial color lookup table to a second partial color lookup table, same pieces of address information indicative of a place in which data constituting the identical partial color lookup table is stored.

9. The image display device as set forth in any one of claims 1 through 4, wherein the image display device is a television receiver.

10. A program for causing a computer to function as each means of an image display device recited in any one of claims 1 through 4.

11. A computer-readable storage medium in which a program recited in claim 10 is recorded.
